# EUROPEAN PATENT SPECIFICATION

(11) **EP 4 017 671 B1**
(45) Date of publication and mention of the grant of the patent: **14.10.2026**
(21) Application number: 20768167.7
(22) Date of filing: 21.08.2020
(51) Int. Cl.: B23K 13/01, B23K 13/08, H05B 6/06, C21D 1/42

(54) **METHOD AND APPARATUS FOR TEMPERATURE CHARACTERIZATION IN WELDING**
VERFAHREN UND VORRICHTUNG ZUR TEMPERATURCHARAKTERISIERUNG BEIM SCHWEISSEN
PROCÉDÉ ET APPAREIL DE CARACTÉRISATION DE TEMPÉRATURE LORS DE SOUDAGE

(30) Priority: 22.08.2019 US 201962890181 P; 17.08.2020 US 202016995018
(43) Date of publication of application: 29.06.2022
(73) Proprietor: Illinois Tool Works Inc., Glenview, IL 60025 (US)
(72) Inventor: ANDERSON, Dylan, Glenview, Illinois 60025 (US)
(74) Representative: HGF
(86) International application number: PCT/US2020/047419
(87) International publication number: WO 2021/035146

(56) References cited:
- US-A1- 2015 334 781
- US-A1- 2016 101 481
- US-B1- 6 713 737

## Description

The present invention relates to heating a workpiece for welding, and more particularly, to a system and a method for controlling heating of a working for welding (see claims 1 and 5), for temperature characterization for optimally heating a workpiece for welding.

Induction heating is a method for producing heat in a localized area on a susceptible metallic object. Induction heating involves applying an AC electric signal to a heating loop or coil placed near a specific location on or around the metallic object to be heated. The varying or alternating current in the loop creates a varying magnetic flux within the metal to be heated. Current is induced in the metal by the magnetic flux, thus heating it. Induction heating may be used for many different purposes including curing adhesives, hardening of metals, brazing, soldering, and other fabrication processes in which heat is a necessary or desirable agent. Prior patent document US 2015/334781 A describes an example of an induction heating system comprising an induction heating device configured to move relative to a workpiece, to generate induction heat, and to direct the induction heat to the workpiece. The system also comprises a temperature sensor assembly configured to detect a temperature of the workpiece and to transmit a feedback signal relating to the detected temperature to a controller that controls a power source providing power to the induction heating device.

Limitations and disadvantages of conventional systems for heating a workpiece for welding will become apparent to one of skill in the art, through comparison of such approaches with some aspects of the present method and system set forth in the present disclosure with reference to the drawings.

### SUMMARY

Methods and systems are provided for temperature characterization in welding, substantially as illustrated by and described in connection with the figures.

The present invention defines a system for and a method for controlling heating of a workpiece by welding according to claims 1 and 5.

Preferred embodiments are defined in their dependent claims.

### BRIEF DESCRIPTION OF THE DRAWINGS

These and/or other aspects will become apparent and more readily appreciated from the following description of some various aspects of examples of the disclosure, taken in conjunction with the accompanying drawings.
FIG. 1 is a high-level block diagram of an example heating system.
FIG. 2 shows a block diagram of an example control circuitry.
FIG. 3 shows a flow diagram representative of example machine readable instructions 300, which may be executed by the example control circuitry 105, 200 of FIGS. 1 and/or 2 to implement the example heating system of FIG. 1.
FIG. 4 shows a detailed flow diagram representative of example machine readable instructions 300, which may be executed by the example control circuitry 105, 200 of FIGS. 1 and/or 2 to implement the example heating system of FIG. 1.

The figures are not necessarily to scale. Where appropriate, similar or identical reference numbers are used to refer to similar or identical components.

### DETAILED DESCRIPTION

Various examples of the present invention improve heating of a workpiece for welding to a target temperature by improving the accuracy of the heated workpiece temperature. For example, when working with smaller workpieces, a workpiece may be easily overheated by conventional heating systems because of the lower thermal mass of such workpieces. In some cases, overheating can damage the workpiece and/or delay performance of the welding operation. Therefore, conventional methods to avoid overheating the workpiece involve an operator closely attending to heating of the workpiece for welding, which may lead to inefficient use of time. When the workpiece is not sufficiently heated (e.g., is heated to less than the target temperature to avoid overheating), extra time may be needed for the actual welding process since the workpiece now needs additional time to be heated to the required temperature. Insufficient heating may lead to greater chances of failed weld, and may result in rejection of a weld done according to a weld procedure specification (WPS).

Therefore, when using, for example, a thermostatically controlled induction heating system to bring a workpiece to a desired temperature, users must be vigilant to ensure that undesired overheating does not occur due to the improper placement or slow response of a temperature sensing device. Monitoring can be particularly important when a heating capacity of a heating device, such as, for example, an induction heating device, exceeds what is required to heat a given workpiece and results in very short heating times.

The situations described above can occur, for example, where users are heating a workpiece with a small thermal mass and/or while using a temperature sensing device that may be poorly thermally coupled to the workpiece (e.g., armored temperature sensing device, temperature sensing device not tightly placed against the workpiece, etc.). However, overheating and/or poor thermal coupling may occur with workpieces of any size.

In the disclosed examples, the user need not manually calculate and set power limits to reduce the temperature overshoot when heating a workpiece. By increasing the accuracy of heating the workpiece and reducing the overshoot of poorly thermally coupled temperature sensing devices, the user can better make use of temperature sensing devices such as, for example, armored temperature sensing devices in various situations, which can result in quicker setup for the user. Disclosed example systems and methods can also aid in reducing wear on heating tools by limiting potential temperature overshoot past safe tool operating limits.

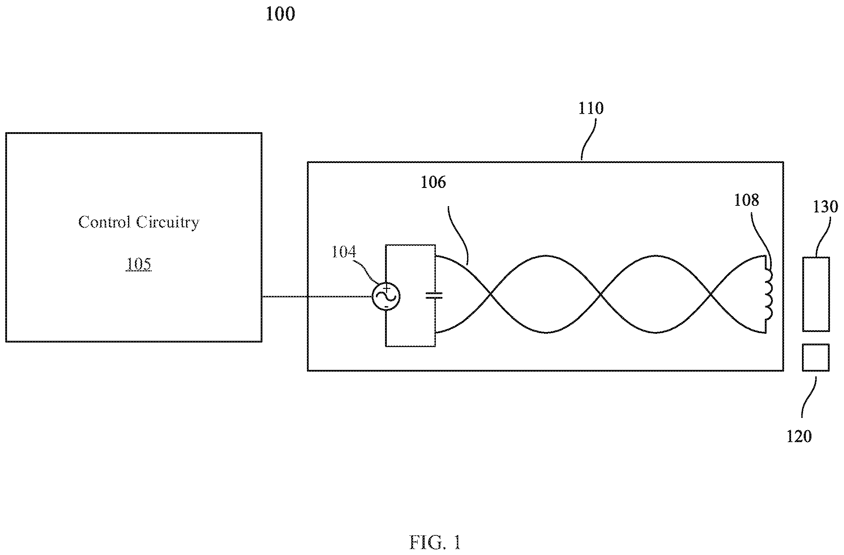

FIG. 1 is a high-level block diagram of a heating system. Referring to FIG. 1, there is shown a heating system 100 that comprises a control circuitry 105 configured to control a heating device 110 suitable for heating a workpiece 130, and sensors 120 suitable for monitoring a temperature of the workpiece 130. The heating system 100 is an induction heating system.

Accordingly, the heating device 110 comprises induction heating power supply 104, conductors 106, and a heating coil 108. The heating system 100 is configured to provide power from the induction heating power supply 104 to the heating coil 108 via the conductors 106. The heating coil 108 is magnetically coupled to the workpiece 130 that is to be heated via the heating device 110. In operation, the induction heating power supply 104 outputs power to the heating device 110 at a heating frequency, which transfers the power to the workpiece 130 to inductively heat the workpiece 130. As illustrated in FIG. 1, the heating power supply 104 is coupled to the heating device 110 via an extension cable 106.

The temperature of the workpiece 130 is monitored at various locations by the sensors 120, which may comprise, for example, temperature sensors. The sensors 120 may be any type of sensors suitable for monitoring the temperature of a welding workpiece, such as, for example, armored temperature sensing devices or spot-welded sensing devices.

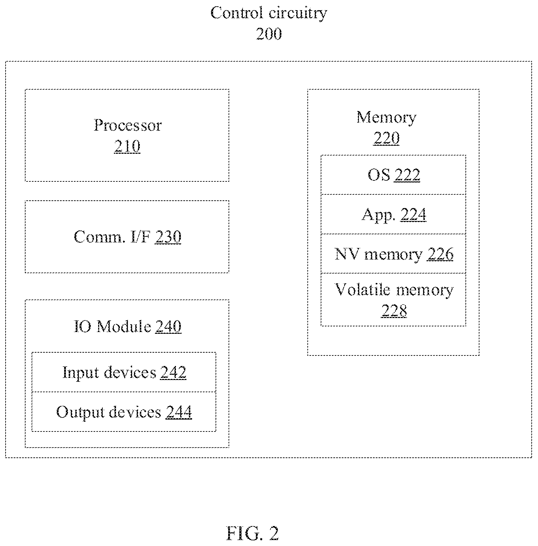

The control circuitry 105 is configured to monitor and control various functions. For example, the control circuitry 105 monitors temperature information from the sensors 120 so that the heating device 110 is controlled to appropriately control the temperature of the workpiece 130. The control circuitry 105 characterizes, based on the received inputs from the sensors 120 and a user via a user interface (e.g., input devices 242 in FIG. 2), a temperature ramp rate for a workpiece so that it can be heated to the desired temperature without overheating the workpiece.

The control circuitry 105 comprises a hardware device capable of executing instructions to perform specific functions. Accordingly, the control circuitry 105 comprises any of a number of different types of processors, memory, logic circuitry, etc. for controlling the heating device 110.

An example heating coil 108 may include two or more conductors and a turn connector. The conductors (and, by extension, the heating coil 108) may be conformably wrapped around the workpiece 130 while the conductors are not electrically connected in series. The example heating coil 108 may comprise, for example, an induction heating blanket, an induction heating assembly, etc. The turn connector connects the two or more conductors in series to configure the first and second conductors as an inductor having two or more turns. The example heating coil 108 may include one or more electrical and/or thermal insulators to, for example, prevent short circuiting and/or protect the conductors from heat induced in the workpiece 130.

FIG. 2 shows a block diagram of a control circuitry. Referring to Figure 2, there is shown a control circuitry 200 that is used, and may be similar to the control circuitry 105 in FIG. 1. The control circuitry 200 may comprise, for example, a processor 210, memory 220, a communication interface 230, and an IO interface 240. The processor 210 may comprise, for example, one or more of processors (CPUs, GPUs, etc.), controllers, system on chips, ASICs, etc.

The memory 220 may include non-volatile memory 226 and volatile memory 228. The storage described for holding local data may be part of the memory 220 or comprise separate memory. The operating system 222 and applications 224 may be stored in, for example, the non-volatile memory 226, and may be copied to volatile memory 228 for execution by the processor 210. One may use different memory architectures that are design and/or implementation dependent. For example, one may have the operating system 222 and applications 224 in the non-volatile memory 226 executed at least in part from the non-volatile memory 226.

The communication interface 230 may allow the control circuitry 200 to communicate with other devices via, for example, a wired protocol such as USB, Ethernet, Firewire, etc., or a wireless protocol such as Bluetooth, Near Field Communication (NFC), Wi-Fi, etc. The wired or wireless protocol may also be, for example, a proprietary protocol. The various types of radios for communication may be referred to as a transceiver for the sake of simplicity. The communication may be, for example, with various sensors and/or devices that can relay sensor data. The communication interface 230 may also be used to communicate with other networks such as local networks, cellular networks, etc. Additionally, the communication interface may allow various devices to plug into, for example, a USB ports. For example, a keyboard and/or a mouse may plug into their respective USB ports, or communicate wirelessly to a USB dongle that allows wireless communication with, for example, a wireless keyboard and/or mouse.

The control circuitry 200 may also comprise the IO module 240 for communication with a user via the input devices 242 and output information to be displayed on output devices 244. The input devices 242 may comprise, for example, switches, slide switches, membrane switches, buttons, touch sensitive screen, which may be a part of a display, a microphone, etc. The touch sensitive screen (touchscreen) may have soft buttons, switches, slide switches, keyboard, etc. that emulate their physical counterparts. The input devices 242 may also comprise, for example, a keyboard, a mouse, a trackball, etc., as well as various sensors, cameras, etc. The input devices 24 may additionally comprise, for example, bar code readers and/or other type of scanners that may be used to identify an object. The output devices 244 may comprise, for example, display(s), speaker(s), LED(s), vibration motor(s), etc. Some devices such as a touchscreen are able to provide both input and output functions of the IO module 240.

The processor 210 may operate using different architectures in different examples of the disclosure. For example, the processor 210 may use the memory 220 to store instructions to execute, or the processor 210 may have its own memory (not shown) for its instructions.

Various examples may use other architectures where the different functionalities may be grouped differently. For example, the functionalities may be in different integrated circuit chips, or different devices may be combined. For example, the IO module 240 and the communication interface 230 may be combined together. Additionally, the control circuitry 200 may refer logically to various physical devices. For example, one or more of the output devices 244 may be part of a different integrated circuit or on a different printed circuit board than one or more of the input devices 242.

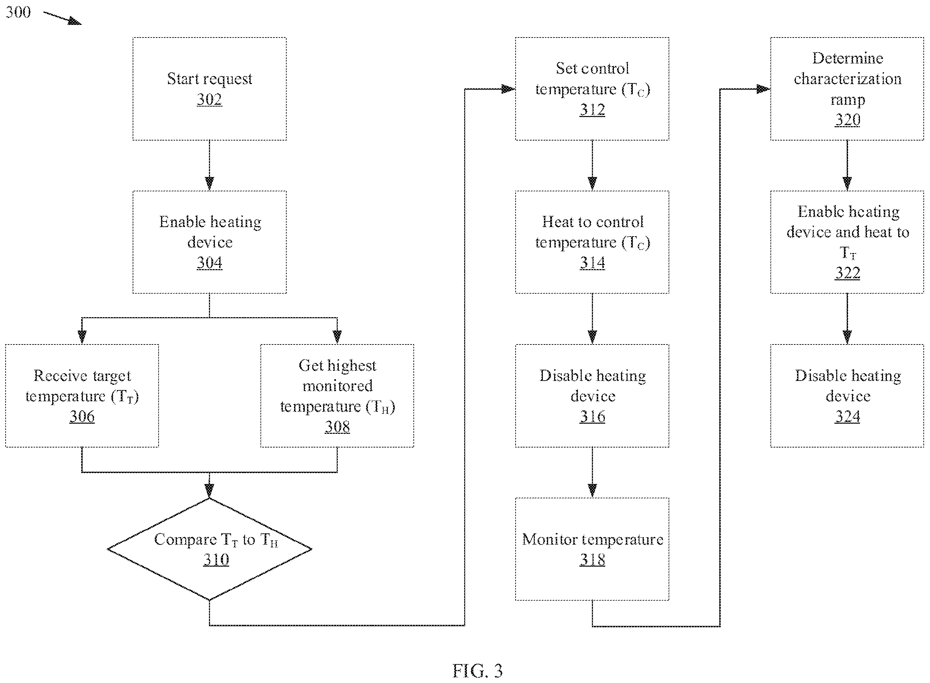

FIG. 3 shows a flow diagram representative of machine readable instructions 300, which may be executed by the example control circuitry 105, 200 of FIGS. 1 and/or 2 to implement the example heating system 100 of FIG. 1. For example, the instructions 300, which may be in an application 224, may be executed by the processor 210 to control the heating device 110 to heat a workpiece 130 to a target temperature. An induction heating device is used as the heating device 110.

In block 302, a start request for heating is received. In block 304, the induction heating device 110 is enabled. In block 306, a target temperature T_{T} to which the workpiece 130 should be heated is received. The target temperature may be, for example, entered or selected by a user via the input devices 242 or received from another electronic device wirelessly and/or by wired communication via the communication interface 230. The workpiece 130 may also recognized by scanning an identification mark such as, for example, a bar code, with an input device 242, optically recognized by an application 224, etc., and then the target temperature looked up in, for example, a look-up table in the memory 220.

In block 308, the control circuitry 105 receives, wirelessly and/or via wire conductors, outputs from one or more sensors 120, each configured to monitor a temperatures at a location of the workpiece 130. The temperature monitoring may occur continuously or at some time interval. When the target temperature T_{T} is received or determined, the control circuitry 105 will select the highest temperature T_{H} for the workpiece 130 monitored via the sensors 120.

In block 310, the target temperature T_{T} is compared to the highest temperature T_{H}. Depending on the result of the comparison, the control temperature T_{C} is set in block 312. In accordance with the invention, control temperature T_{C} is set to a temperature between the highest temperature T_{H} and the target temperature T_{T}.

In block 314, the heating device 110 heats the workpiece 130 to the control temperature Tc, or to substantially the control temperature Tc as allowed by the heating system 100. "Substantially the control temperature Tc" may be a temperature within a pre-determined margin to the temperature T_{C} that may be pre-determined for a given usage. The pre-determined margin may depend on various parameters, such as, for example, the type of metal being heated, the type of heating device 110, etc. Accordingly, "substantially the control temperature Tc" may be set by the processor 210, by the user using any of the input devices 242, or via commands received with the communication interface 230.

As examples, the margin for an application may be within 10% of the control temperature T_{C} in one case, 5% of the control temperature T_{C} in another case, 1% of the control temperature T_{C} in another case, etc. Therefore, as the margin may differ for different cases, the specific margins given as examples above do not limit any examples of the disclosure.
When the heating system 100 monitors the sensors 120 periodically, the temperature of the workpiece 130 may be at a temperature that is below or above the control temperature T_{C}. The monitoring period may adjustable in some examples of the disclosure, while other examples of the disclosure may have a fixed monitoring period. The monitoring period used may be variable in some examples of the disclosure while other examples of the disclosure may have a fixed monitoring period. That is, the monitoring period may change while monitoring the workpiece 130 or the monitoring period may remain the same for a first workpiece 130 but may be changed for a second workpiece 130. The monitoring period may be timed via a software timer in, for example, the operating system 222 or the applications 224, or a hardware timer that may be a part of, for example, the control circuitry 105.

Some examples involve determining that the control temperature Tc is reached when the temperature is within a temperature range. The temperature range may be fixed or variable depending on various parameters such as, for example, the interval at which the temperature of the workpiece is determined, the characteristics of the workpiece, etc.

In block 316, the control circuitry 105 disables the heating device 110 to stop heating the workpiece 130 when the highest temperature T_{H} from any of the various sensors 120 indicates that the workpiece 130 has reached the control temperature Tc or is at substantially the control temperature Tc.

In block 318, the control circuitry 105 monitors the continuing rise in overshoot temperature of the workpiece 130 based on the outputs of the sensors 120. Once the outputs of the sensors 120 indicate that the temperature of the workpiece 130 has peaked, the temperature overshoot, which is the difference in temperature from the control temperature Tc to the peak temperature, and the overshoot time, which is the time period from when the heating device 110 is disabled to the workpiece 130 reaching its peak temperature, are determined.

In block 320, a temperature ramp rate is determined by, for example, the processor 210 of the control circuitry 105 based on the temperature overshoot and/or the overshoot time for use in heating the workpiece 130 to the target temperature T_{T}. The temperature ramp rate may be a linear ramp or a non-linear ramp. An example of a linear ramp may be, for example, increasing the control temperature Tc for the workpiece 130 by a constant temperature amount per unit time until the target temperature T_{T} is reached without overshooting beyond an acceptable margin. The control temperature T_{C} may be increased, for example, periodically.

The control circuitry 105 controls the temperature of the heating device 110 periodically such that the temperature of the workpiece reaches substantially the target temperature T_{T} without overshooting beyond an acceptable margin. "Substantially the target temperature T_{T}" may be a temperature within a margin to the target temperature T_{T} that may be pre-determined for a given usage. The margin may depend on various parameters, such as, for example, the type of metal being heated, the type of heating device 110, etc. Accordingly, "substantially the target temperature T_{T}" may be set by the processor 210, by the user using any of the input devices 242, or via commands received with the communication interface 230.

As examples, the margin for an application may be within 5% of the target temperature T_{T} in one case, 2% of the target temperature T_{T} in another case, 1% of the target temperature T_{T} in another case, etc. Therefore, as the margin may differ for different cases, the specific margins given as examples above do not limit any examples of the disclosure.

The heating period used may be variable in some examples while other examples may have a fixed period. That is, the heating period may change while heating the workpiece 130 or the heating period may remain the same for a first workpiece 130 but may be changed for a second workpiece 130. The heating period may be timed via a software timer in, for example, the operating system 222 or the applications 224, or a hardware timer that may be a part of, for example, the control circuitry 105.

A single timer may be used for monitoring the temperature of the workpiece 130 and for using the temperature ramp rate in heating the workpiece 130, or independent timers may be used. The workpiece 130 may be heated to an interim temperature T_{I} that is raised, for example, periodically based on the temperature ramp rate.

In block 322, the control circuitry 105 enables the heating device 110 to heat the workpiece 130 to the target temperature T_{T} using the temperature ramp rate. An example of the disclosure may increase a target temperature of the workpiece 130 to an interim temperature T_{I} periodically until the interim temperature T_{I} equals the target temperature T_{T}. Accordingly, the heating device 110 can heat the workpiece 130 according to the increasing interim temperature T_{I} until the target temperature T_{T} is reached.

In block 324, when the workpiece 130 reaches the target temperature T_{T}, or reaches substantially the target temperature T_{T}, the heating device 110 is disabled.

While an example flow diagram is shown in FIG. 3 for illustrative purposes, it should be understood that various other flow diagrams may also describe other examples of the disclosure. For example, in another example of the disclosure, the blocks 306 and 308 may happen serially in either order rather than in parallel as shown in FIG. 3.

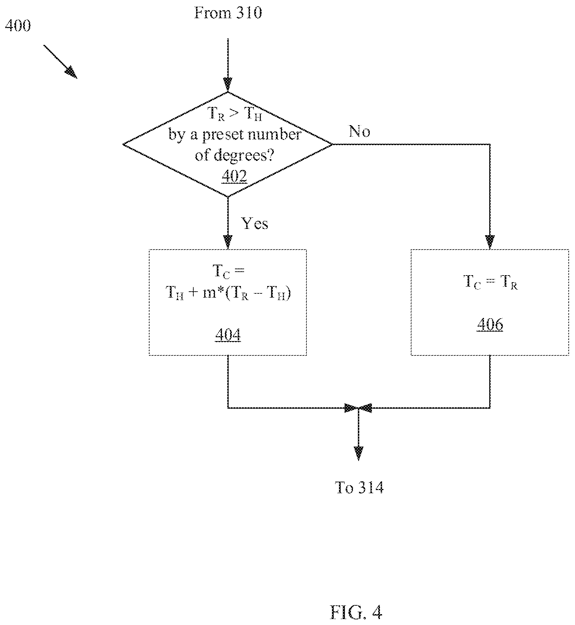

FIG. 4 shows a detailed flow diagram representative of example machine readable instructions 300, which may be executed by the example control circuitry 105, 200 of FIGS. 1 and/or 2 to implement the example heating system of FIG. 1. The example instructions 400 may be performed to implement block 312 of FIG. 3 to set the control temperature Tc. The example instructions 400 comprising block 402, block 404 and block 406, as shown in FIG. 4, is not covered by the subject-matter of the appended claims.

In block 402, the comparison of the target temperature T_{T} to the current highest temperature T_{H} performed by the processor 210 is used. In block 404, in an example algorithm in the application 224 executed by the processor 210, when the difference between the target temperature T_{T} and the current highest temperature T_{H} is larger than a threshold value (TH1), the control temperature Tc is set to: ${T}_{C} = {T}_{H} + m * \left({T}_{T}-{T}_{H}\right)$ (Equation 1) where 'm' is less than or equal to 1 and greater than or equal to 0.

One may set 'm' to be in the range of, for example, substantially 0.15 to substantially 0.75. An example of the disclosure may set 'm' to, for example, substantially 0.25. Furthermore, some examples of the disclosure may set the threshold value (TH1) to be in the range of, for example, substantially 10° C to substantially 50° C. An example of the disclosure may set the threshold value (TH1) to, for example, substantially 25° C.

In this algorithm, when the difference between the target temperature T_{T} and the current highest temperature T_{H} is less than or equal to the threshold value (TH1), the control temperature Tc is set by the processor 210 to the target temperature T_{T}: ${T}_{C} = {T}_{T}$ (Equation 2)

Accordingly, the heating system 100 is configured to control the heating device 110 based on the received target temperature (T_{T}), the temperature ramp rate, and feedback based on the outputs of the sensors 120.

As can be seen, heating systems 100 are disclosed for controlling heating of a workpiece 130 for welding, in which the system comprises an interface configured to receive a target temperature (T_{T}) for the workpiece, and a processor configured to determine, based on monitoring outputs of one or more temperature sensors, a current highest temperature (T_{H}) for the workpiece and set a control temperature (T_{C}) based on the received target temperature and the current highest temperature.

In accordance with the invention, the heating system also comprises a control system configured to heat the workpiece to substantially the control temperature (T_{C}) by turning on a heating device and turning off the heating device when the workpiece reaches substantially the control temperature (T_{C}).

The processor is configured to characterize a temperature ramp rate based on a measured temperature overshoot at the workpiece after turning off the heating device, and the control system is configured to heat the workpiece to the received target temperature (T_{T}) by controlling the heating device based on the temperature ramp rate.

The processor is configured to set the control temperature (T_{C}) to a temperature between the current highest temperature (T_{H}) and the received target temperature (T_{T}).

The heating system 100 is configured to heat the workpiece using induction. The system may comprise a communication device configured to receive the target temperature (T_{T}) via one or more of a user interface, wired communication from another device, and wireless communication from another device.

The processor may be configured to perform one or both of monitoring the outputs of the one or more temperature sensors at an expiration of a first time timer, and control updating of the interim temperature (T_{I}) at an expiration of a second timer. The first timer and the second timer may be the same timer, while in other examples of the disclosure, the first timer and the second timer may be separate, independent timers.

Accordingly, it can be seen that the heating system 100 is configured to control the heating device based on the received target temperature (T_{T}), the temperature ramp rate, and feedback based on the outputs of the one or more temperature sensors.

In accordance with the present invention, there is also provided methods for controlling heating of a workpiece for welding, where a target temperature (T_{T}) is received for the workpiece. A method includes determining, from outputs of one or more temperature sensors, a current highest temperature (T_{H}) for the workpiece sensed by the one or more temperature sensors, and setting a control temperature (T_{C}) based on the received target temperature (T_{T}) and the current highest temperature (T_{H}).

The workpiece is then heated to substantially the control temperature (T_{C}) by turning on a heating device, and the heating device is turned off when the workpiece reaches substantially the control temperature (T_{C}). A temperature ramp rate is then characterized based on a measured temperature overshoot at the workpiece after turning off the heating device. The workpiece is heated to the received target temperature (T_{T}) by controlling the heating device based on the temperature ramp rate.

The control temperature (T_{C}) is set to a temperature between the current highest temperature (T_{H}) and the received target temperature (T_{T}).

The heating device is configured to heat the workpiece using induction.

The received target temperature (T_{T}) from a user may be received via one or more of a user interface, wired communication, or wireless communication.

The method may further comprise monitoring the outputs of the one or more temperature sensors at an expiration of a first timer, and updating an interim temperature (T_{I}) at an expiration of a second timer, where the workpiece is heated to the interim temperature (T_{I}) based on the temperature ramp rate.

The present methods and systems according to the present invention may be realized in hardware, software, and/or a combination of hardware and software. The present methods and/or systems according to the present invention may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise one or more application specific integrated circuit or chip. Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, "one of x or y" or "one of x and y" is equivalent to any element of the set {(x), (y)}.

As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present invention has been described with reference to certain examples and/or aspects, it will be understood by those skilled in the art that various changes may be made and equivalents may be substituted without departing from the scope of the present invention as defined in the appended claims.

## Claims

1. A system (100) for controlling heating of a workpiece (130) for welding, comprising:
an interface (230, 242) configured to receive a target temperature (T_{T}) for the workpiece, one or more temperature sensors (120), and a heating device (110) configured to heat the workpiece using induction;
**characterised in that** the system (100) further comprises:
a processor (210) configured to:
determine, based on monitoring outputs of one or more temperature sensors (120), a current highest temperature (T_{H}) for the workpiece (130); and
set a control temperature (T_{C}) based on the received target temperature and the current highest temperature;
wherein the processor is configured to set the control temperature (T_{C}) to a temperature between the current highest temperature (T_{H}) and the received target temperature (T_{T}); and
a control system (105; 200) configured to:
heat the workpiece to substantially the control temperature (T_{C}) by turning on the heating
device and turning off the heating device (110) when the workpiece reaches substantially the control temperature (T_{C}); and
heat the workpiece to the received target temperature (T_{T}) by controlling the heating device based on a temperature ramp rate;
wherein:
the processor is configured to characterize the temperature ramp rate based on a measured temperature overshoot at the workpiece after turning off the heating device.

2. The system (100) of claim 1, comprising a communication device (230, 240) configured to receive the target temperature (T_{T}) via one or more of user interface, wired communication from another device, and wireless communication from another device.

3. The system (100) of claim 1, wherein the processor (210) is configured to perform one or both of:
monitor the outputs of the one or more temperature sensors (120) at an expiration of a first time timer, and
control updating an interim temperature (T_{I}) based on the temperature ramp rate at an expiration of a second timer, wherein the control system (105; 200) is configured to heat the workpiece (130) to the interim temperature (T_{I}).

4. The system (100) of claim 1, wherein the control system (105; 200) is configured to control the heating device (110) based on the received target temperature (T_{T}), the temperature ramp rate, and feedback based on the outputs of the one or more temperature sensors (120).

5. A method (300) for controlling heating of a workpiece (130) for welding, comprising:
receiving a target temperature (T_{T}) for the workpiece;
determining, from outputs of one or more temperature sensors (120), a current highest temperature (T_{H}) for the workpiece sensed by the one or more temperature sensors;
setting a control temperature (Tc) based on the received target temperature (T_{T}) and the current highest temperature (T_{H}) to a temperature between the current highest temperature (T_{H}) and the received target temperature (T_{T});
heating the workpiece to substantially the control temperature (T_{C}) by turning on a heating device (110) and turning off the heating device when the workpiece reaches substantially the control temperature (T_{C});
characterizing a temperature ramp rate based on a measured temperature overshoot at the workpiece after turning off the heating device; and
heating the workpiece to the received target temperature (T_{T}) by controlling the heating device based on the temperature ramp rate,
wherein the heating device is heating the workpiece using induction.

6. The method (300) of claim 5, comprising receiving the received target temperature (T_{T}) from a user via one or more of a user interface, wired communication, or wireless communication.

7. The method (300) of claim 5, comprising one or both of:
monitoring the outputs of the one or more temperature sensors (120) at an expiration of a first timer, and
updating an interim temperature (T_{I}) at an expiration of a second timer, wherein the workpiece (130) is heated to the interim temperature (T_{I}) based on the temperature ramp rate.

## Patentansprüche

1. System (100) zum Steuern der Erwärmung eines Werkstücks (130) zum Schweißen, aufweisend: eine Schnittstelle (230, 242), die zum Empfangen einer Zieltemperatur (T_{T}) für das Werkstück eingerichtet ist, einen oder mehrere Temperatursensoren (120) und eine Heizvorrichtung (110), die zum Erwärmen des Werkstücks mittels Induktion konfiguriert ist;
**dadurch gekennzeichnet, dass** das System (100) ferner Folgendes aufweist:
einen Prozessor (210), der für Folgendes konfiguriert ist:
Bestimmen, basierend auf der Überwachung der Ausgänge von einem oder mehreren Temperatursensoren (120), einer aktuellen Höchsttemperatur (T_{H}) für das Werkstück (130); und
Einstellen einer Steuertemperatur (T_{C}) basierend auf der empfangenen Zieltemperatur und der aktuellen Höchsttemperatur;
wobei der Prozessor so konfiguriert ist, dass er die Steuertemperatur (T_{C}) auf eine Temperatur zwischen der aktuellen Höchsttemperatur (T_{H}) und der empfangenen Zieltemperatur (T_{T}) EINSTELLT; und ein Steuersystem (105; 200), das für Folgendes konfiguriert ist:
Erwärmen des Werkstücks auf im Wesentlichen die Steuertemperatur (T_{C}) durch Einschalten der Heizvorrichtung und Ausschalten der Heizvorrichtung (110), wenn das Werkstück im Wesentlichen die Steuertemperatur (T_{C}) erreicht hat; und
Erwärmen des Werkstücks auf die empfangene Zieltemperatur (T_{T}) durch Steuern der Heizvorrichtung basierend auf einer Temperaturrampengeschwindigkeit;
wobei:
der Prozessor so konfiguriert ist, dass er eine Temperaturrampengeschwindigkeit basierend auf einem gemessenen Temperaturüberschwingen an dem Werkstück nach dem Ausschalten der Heizvorrichtung charakterisiert.

2. System (100) nach Anspruch 1, aufweisend eine Kommunikationsvorrichtung (230, 240), die so konfiguriert ist, dass sie die Zieltemperatur (T_{T}) über eine oder mehrere von Benutzerschnittstellen, drahtgebundener Kommunikation von einer anderen Vorrichtung und drahtloser Kommunikation von einer anderen Vorrichtung empfängt.

3. System (100) nach Anspruch 1, wobei der Prozessor (210) zur Ausführung einer oder beider der folgenden Aufgaben konfiguriert ist:
Überwachen der Ausgänge des einen oder der mehreren Temperatursensoren (120) bei Ablauf eines ersten Zeittimers, und
Steuern des Aktualisierens einer Zwischentemperatur (T_{I}) basierend auf der Temperaturrampengeschwindigkeit beim Ablauf eines zweiten Timers, wobei das Steuersystem (105; 200) so konfiguriert ist, dass es das Werkstück (130) auf die Zwischentemperatur (T_{I}) erwärmt.

4. System (100) nach Anspruch 1, wobei das Steuersystem (105; 200) so konfiguriert ist, dass es die Heizvorrichtung (110) basierend auf der empfangenen Zieltemperatur (T_{T}), der Temperaturrampengeschwindigkeit und der Rückkopplung basierend auf den Ausgängen des einen oder der mehreren Temperatursensoren (120) steuert.

5. Verfahren (300) zum Steuern der Erwärmung eines Werkstücks (130) zum Schweißen, aufweisend:
Empfangen einer Zieltemperatur (T_{T}) für das Werkstück;
Bestimmen, anhand der Ausgänge von einem oder mehreren Temperatursensoren (120), einer aktuellen Höchsttemperatur (T_{H}) für das Werkstück, die von dem einen oder den mehreren Temperatursensoren erfasst wird;
Einstellen einer Steuertemperatur (T_{C}) basierend auf der empfangenen Zieltemperatur (T_{T}) und der aktuellen Höchsttemperatur (T_{H}) auf eine Temperatur zwischen der aktuellen Höchsttemperatur (T_{H}) und der empfangenen Zieltemperatur (T_{T});
Erwärmen des Werkstücks auf im Wesentlichen die Steuertemperatur (T_{C}) durch Einschalten einer Heizvorrichtung (110) und Ausschalten der Heizvorrichtung, wenn das Werkstück im Wesentlichen die Steuertemperatur (T_{C}) erreicht hat;
Charakterisieren einer Temperaturrampengeschwindigkeit basierend auf einem gemessenen Temperaturüberschwingen an dem Werkstück nach dem Ausschalten der Heizvorrichtung; und
Erwärmen des Werkstücks auf die empfangene Zieltemperatur (T_{T}) durch Steuern der Heizvorrichtung basierend auf der Temperaturrampengeschwindigkeit,
wobei die Heizvorrichtung das Werkstück mittels Induktion erwärmt.

6. Verfahren (300) nach Anspruch 5, aufweisend das Empfangen der empfangenen Zieltemperatur (T_{T}) von einem Benutzer über eine oder mehrere von Benutzerschnittstellen, drahtgebundener Kommunikation oder drahtloser Kommunikation.

7. Verfahren (300) nach Anspruch 5, aufweisend eines oder beides von:
Überwachen der Ausgänge des einen oder der mehreren Temperatursensoren (120) bei Ablauf eines ersten Timers, und
Aktualisieren einer Zwischentemperatur (T_{I}) beim Ablauf eines zweiten Timers, wobei das Werkstück (130) basierend auf der Temperaturrampengeschwindigkeit auf die Zwischentemperatur (T_{I}) erwärmt wird.

## Revendications

1. Système (100) pour commander le chauffage d'une pièce à souder (130), comprenant : une interface (230, 242) configurée pour recevoir une température cible (T_{T}) pour la pièce à souder, un ou plusieurs capteurs de température (120), et un dispositif de chauffage (110) configuré pour chauffer la pièce à souder en utilisant l'induction ;
**caractérisé en ce que** le système (100) comprend en outre :
un processeur (210) configuré pour :
déterminer, sur la base des données fournies par un ou plusieurs capteurs de température (120), une température actuelle la plus élevée (T_{H}) pour la pièce à souder (130) ; et
régler une température de commande (T_{C}) sur la base de la température cible reçue et de la température actuelle la plus élevée ;
dans lequel le processeur est configuré pour régler la température de commande (T_{C}) à une température comprise entre la température actuelle la plus élevée (T_{H}) et la température cible reçue (T_{T}) ; et un système de commande (105 ; 200) configuré pour :
chauffer la pièce à souder sensiblement à la température de commande (T_{C}) en mettant en marche le dispositif de chauffage et en mettant hors service le dispositif de chauffage (110) lorsque la pièce à souder atteint sensiblement la température de commande (T_{C}) ;
et
chauffer la pièce à souder à la température cible reçue (T_{T}) en commandant le dispositif de chauffage sur la base d'une vitesse de rampe de température ;
dans lequel :
le processeur est configuré pour caractériser la vitesse de rampe de température sur la base d'un dépassement de température mesuré au niveau de la pièce à souder après la mise hors tension du dispositif de chauffage.

2. Système (100) selon la revendication 1, comprenant un dispositif de communication (230, 240) configuré pour recevoir la température cible (T_{T}) par l'intermédiaire d'une ou plusieurs interfaces utilisateur, une communication câblée provenant d'un autre dispositif, et une communication sans fil provenant d'un autre dispositif.

3. Système (100) selon la revendication 1, dans lequel le processeur (210) est configuré pour exécuter l'un ou les deux parmi :
surveiller les sorties du ou des capteurs de température (120) à l'expiration d'un premier temporisateur, et
commander la mise à jour d'une température intermédiaire (T_{I}) sur la base de la vitesse de rampe de température à l'expiration d'un deuxième temporisateur, dans lequel le système de commande (105 ; 200) est configuré pour chauffer la pièce à souder (130) à la température intermédiaire (T_{I}).

4. Système (100) selon la revendication 1, dans lequel le système de commande (105 ; 200) est configuré pour commander le dispositif de chauffage (110) sur la base de la température cible reçue (T_{T}), de la vitesse de rampe de température, et de la rétroaction sur la base des sorties du ou des capteurs de température (120).

5. Procédé (300) pour commander le chauffage d'une pièce à souder (130) pour le soudage, comprenant :
la réception d'une température cible (T_{T}) pour la pièce à souder ;
la détermination, à partir des sorties d'un ou de plusieurs capteurs de température (120), d'une température la plus élevée actuelle (T_{H}) pour la pièce à souder détectée par le ou les capteurs de température ;
le réglage d'une température de commande (T_{C}) sur la base de la température cible reçue (T_{T}) et de la température la plus élevée actuelle (T_{H}) à une température entre la température la plus élevée actuelle (T_{H}) et la température cible reçue (T_{T}) ;
le chauffage de la pièce à souder sensiblement à la température de commande (T_{C}) en mettant en marche un dispositif de chauffage (110) et en mettant hors service le dispositif de chauffage lorsque la pièce à souder atteint sensiblement la température de commande (T_{C}) ;
la caractérisation d'une vitesse de rampe de température sur la base d'un dépassement de température mesuré au niveau de la pièce à souder après la mise hors tension du dispositif de chauffage ; et
le chauffage de la pièce à souder à la température cible reçue (T_{T}) en commandant le dispositif de chauffage sur la base de la vitesse de rampe de température,
dans lequel le dispositif de chauffage chauffe la pièce à souder par induction.

6. Procédé (300) selon la revendication 5, comprenant la réception de la température cible reçue (T_{T}) en provenance d'un utilisateur via un ou plusieurs parmi une interface utilisateur, une communication câblée, ou une communication sans fil.

7. Procédé (300) selon la revendication 5, comprenant l'un ou les deux parmi :
la surveillance des sorties du ou des capteurs de température (120) à l'expiration d'un premier temporisateur, et
la mise à jour d'une température intermédiaire (T_{I}) à l'expiration d'un deuxième temporisateur, dans lequel la pièce à souder (130) est chauffée à la température intermédiaire (T_{I}) sur la base de la vitesse de rampe de température.
